# EUROPÄISCHE PATENTSCHRIFT

(11) **EP 2 650 094 B1**
(45) Veröffentlichungstag und Bekanntmachung des Hinweises auf die Patenterteilung: **20.01.2016**
(21) Anmeldenummer: 13158650.5
(22) Anmeldetag: 11.03.2013
(51) Int. Cl.: B29B 11/16, B29C 70/44, B29C 53/82, B29C 33/50

(54) **Verfahren zum Herstellen eines Vorformlings**
Method for producing a preform
Procédé de fabrication d'une préforme

(30) Priorität: 12.03.2012 DE 102012004942
(43) Veröffentlichungstag der Anmeldung: 16.10.2013
(73) Patentinhaber: Munich Composites GmbH, 85521 Ottobrunn (DE)
(72) Erfinder: Rüger, Olaf, 85573 Markt Schwaben (DE); Fröhlich, Felix, 85774 Unterföhring (DE); Wachter, Florian, 80805 München (DE)
(74) Vertreter: Winter, Brandl, Fürniss, Hübner, Röss, Kaiser, Polte - Partnerschaft mbB

(56) Entgegenhaltungen:
- EP-A2- 2 502 733
- WO-A1-98/30374
- DE-A1-102008 023 629
- US-A- 5 217 766
- US-A- 5 259 901

## Beschreibung

### Gebiet der Erfindung

Die Erfindung betrifft ein Verfahren zum Herstellen eines Vorformlings für eine Weiterverarbeitung zu einem Harz beinhaltenden Fertigbauteil und ein Verfahren zum Herstellen eines Faserverbundfertigbauteils.

Faserverbundfertigbauteile sind solche Bauteile, die insbesondere einen hohlen Querschnitt aufweisen, also als Faserverbundhohlbauteile bezeichnet werden können, und insbesondere im Automobilbereich, z.B. als Stoßstangen oder Stoßstangenträger eingesetzt werden.

Faserverbundwerkstoffe bieten aufgrund ihrer hohen spezifischen Eigenschaften großes Leichtbaupotenzial. Vor allem in der Luft- und Raumfahrtindustrie werden kohlenstofffaserverstärkte Werkstoffe, die auch als carbonfaserverstärkte Werkstoffe bezeichnet werden, seit Jahrzehnten eingesetzt. Mit der steigenden Marktnachfrage des letzten Jahrzehnts sind Verstärkungsfasern preislich auch für den Maschinen- und Anlagenbau sowie für den Automobilbereich interessant geworden. Eine Motivation für den Einsatz dieses neuen Werkstoffes sind vor allem die hohen mechanischen Eigenschaften von Faserverbundwerkstoffen bei geringer Dichte. So können Strukturen leichter gebaut und somit effizienter genutzt werden. Im klassischen Leichtbau werden, aufgrund der hohen spezifischen Flächenträgheitsmomente, meist Hohlprofile eingesetzt. Die Anzahl der Hohlprofile an den gesamt hergestellten Faserverbundwerkbauteilen beträgt ca. 50 %.

Komplex geformte Hohlbauteile werden heute meist in zweischaliger Bauweise gefertigt und später verklebt. Beispiele hierfür sind im Automobilbereich zahlreich vorhanden oder auch bei der Fertigung von Booten oder Blättern von Windenergieanlagen aufzufinden. Ein Nachteil dieser Bauweise ist die Durchtrennung der lasttragenden Fasern an der Verbindungsstelle der Schalen. Die Eigenschaften der Fasern können so nicht voll ausgeschöpft werden, was zu höheren Gewichten und geringeren Dauerfestigkeiten führt.

Werden Hohlbauteile jedoch integral, in einem Stück gefertigt, stellt sich immer die Frage nach einem passenden Kernkonzept. Bei einfach geformten Bauteilen finden meist feststehende Kerne Einsatz. Diese Kerne können durch den Einsatz von Entformungsschrägen und thermischem Schrumpf vom Bauteil getrennt und ausgelöst werden. Bei rotationssymmetrischen Kernen, die Hinterschnitte aufweisen, gibt es jedoch Probleme bei der Trennung des Kerns vom Bauteil.

Bei solchen komplexeren Geometrien, welche Hinterschnitte und Krümmungen aufweisen, ist die Auslösung des Kernes nicht ohne weiteres möglich. Da in der Industrie jedoch vor allem komplex geformte Bauteile benötigt werden, stellt sich bei der Fertigung von solchen Faserverbundfertigbauteilen, insbesondere solchen, die als Hohlbauteile ausgebildet sind, immer die Frage nach einem passenden Kernkonzept.

Dieser Kern muss dabei den nachfolgenden Anforderungen genügen:
1. Maßhaltigkeit im Bereich < 0,1 %
2. Stabilität zur automatisierten Verarbeitung
3. Wiederverwendbarkeit
4. Geringe Kosten
5. Darstellung von komplexen Geometrien
6. Möglichkeit der Nachkompaktierung

Aus dem Stand der Technik sind bereits Druckschriften bekannt, die auf ähnlichem Gebiet Lösungen anbieten, so z.B. die DE 10 2009 027 049 A1, die DE 10 2006 031 323 A1, die DE 601 10 937 T2, die WO 98/30374 A1, die US 5,217,766 A, die EP 2 502 733 A2, die US 5,259,901 A und die DE 10 2008 023629 A1. WO 98/30374 offenbart die Markmale des Oberbegriffs des Anspruchs 1.

Benachbarter Stand der Technik ist auch aus der DE 691 17 977 T2 bekannt, dort wird nämlich ein Verfahren zum Herstellen von Verbundkonstruktionen und entsprechend hergestellte Produkte offenbart. Aus der DE 195 06 743 C1 ist auch eine Wickelkernbaugruppe bekannt, mit einem hohlen Hauptrohr und zwei ringförmigen Buchsen, wobei ein Innendurchmesser der zwei ringförmigen Buchsen größer als ein Außendurchmesser der zwei Hauptrohrendabschnitte ist, und wobei die zwei ringförmigen Buchsen auf die zwei Hauptrohrendabschnitte geschoben sind und leicht von der Wickelkernbaugruppe bei Anlegen einer äußeren Kraft getrennt werden können. Ein harzimprägniertes flexibles, rohrförmiges Element ist aus der US 5 487 806 A bekannt. Ferner offenbart die WO 2010/069084 A1 ein Verfahren zur Herstellung eines formstabilen Verbundwerkstoffhohlkörpers.

Ein fahrradspezifisches Bauteil ist auch aus der FR 2 894 874 A1 bekannt. Die US 5 087 193 A offenbart ferner eine Vorrichtung zum Ausformen eines Faserverbundbauteils.

Grundsätzlich lassen sich Kernkonzepte in auslösbare und verbleibende Kernkonzepte unterteilen, wobei die auslösbaren Kernkonzepte in direkt wiederverwendbare, wiederverwendbare nach Aufbereitung und verlorene Kernkonzepte unterschieden werden können. Die als verbleibende Kernkonzepte bezeichneten Varianten unterscheiden sich in der Verwendung von Strukturschäumen und nicht strukturellen Schäumen.

Die direkt wiederverwendbaren, auslösbaren Kernkonzepte werden unterschieden in feststehende Kerne, wobei Metalle, wie Aluminium oder Stahl Verwendung finden, aufblasbare Schläuche, oder Vollmaterialien, die u.U. auch Silikon enthalten können.

Solche auslösbaren Kernkonzepte, die wiederverwendbar nach einer Aufbereitung sind, sind entweder niederschmelzende Metalllegierungen, niederschmelzende Kunststoffe, Wachse oder Sandkerne.

Als verlorene, auslösbare Kerne, sind auswaschbare Materialien, wie z.B. Aquacore, oder aufblasbare Kerne aus PU oder PET bekannt.

Bei verbleibenden Kernen handelt es sich ausschließlich um Einwegkerne. Das heißt, für ein Bauteil wird ein Kern benötigt, wobei sich keine Möglichkeiten für die Wiederverwendung des Kernes oder des Kemmaterials ergeben. Strukturschäume haben hierbei den Vorteil, dem Endprodukt zu mehr Steifigkeit oder Festigkeit zu verhelfen, wobei sie jedoch den Nachteil haben, spanend hergestellt werden zu müssen. Die nichtstrukturellen Schäume können dagegen recht kostengünstig in Urformen gegossen und ausgehärtet werden. Das zusätzlich eingebrachte Gewicht verringert hierbei jedoch oft die Vorteile gegenüber metallischen Werkstoffen, wobei die aufwändige und teure Herstellung der Kerne für Großserien ungeeignet ist oder zu erheblichen Preissteigerungen am Endprodukt führt. Aber die vorliegende Erfindung soll gerade auch in Großserien anwendbar sein.

Die verlorenen Kerne verhalten sich sehr ähnlich, wie verbleibende Kerne, wobei sie Einwegkerne sind, allerdings mit dem Vorteil, dass nach dem Aushärten des Bauteils keine Kernrückstände mehr zurückgelassen werden. Auswaschbare Materialien, wie z.B. Aquacore, stellen besondere Ansprüche an die Kernherstellung und können mit ungefähr 20 Euro/Liter beträchtliche Mehrkosten in einer Serienfertigung verursachen.

Aufblasbare Kerne auf PU- oder PET-Basis sind dünnwandige Kerne, die ähnlich wie eine Getränkeflasche bei anliegendem Innendruck formstabil sind. Für große Stückzahlen werden diese Kerne sehr billig, haben jedoch den Nachteil, sehr ungenau zu sein und eine schlechte Temperaturbeständigkeit zu besitzen.

Auslösbare Kerne, dessen Material nach dem Entfernen aus dem Bauteil wiederverwendet werden kann, basieren oft aus auf der Gusstechnik bekannten Sandformen, niedrigschmelzenden Kunststoffen oder Metallen. Hier befindet sich das Kernmaterial jeweils in einem geschlossenen Kreislauf und dient nach dem Entfernen wieder als Ausgangsmaterial für neue Kerne. Direkt wiederverwendbare Kerne aus soliden Materialien benötigen Formschrägen, ähnlich wie beim Gießen. Mit dieser Technik sind jedoch keine Hinterschnitte realisierbar und lediglich mit weicheren Materialien, wie Silikon können minimale Hinterschnitte umgesetzt werden. Dieses Konzept bietet dank seiner Wiederverwendbarkeit der Kerne und der geringen Herstellungskosten bereits eine gute Basis für einfache Großserienbauteile. Aufblasbare Schläuche werden herkömmlich zwischen zwei bereits mit Gewebe belegten Formhälften eingelegt und nach dem Schließen der Form mit Druck beaufschlagt. Der wiederverwendbare Schlauch verpresst anschließend über den Innendruck die Faserlagen und lässt sich nach dem Aushärten einfach aus dem Bauteil entfernen. Dieses Konzept ist für einfache und rotationssymmetrische Geometrien geeignet, bei der die Faserablage direkt im Werkzeug stattfinden kann. Für komplexe Konturen und für die direkte Faserablage auf dem Kern ist dieses System jedoch nur bedingt geeignet.

Die Erfinder haben in diesem Zusammenhang am 24.12.2010 die derzeit noch nicht veröffentlichte Patentanmeldung DE 10 2010 056 293 eingereicht, veröffentlicht in EP-A-2468484. In dieser Patentanmeldung wird ein Verfahren zum Herstellen eines hohlen Faserverbundbauteils mit in Harz eingebetteten Verstärkungsfasern offenbart, wobei einzelne Schritte offenbart sind, nämlich:
a) ein Schritt, bei dem eine verlorene Ausgangsform mit zumindest einer Lage aus ersten Verstärkungsfasern umgeben wird,
b) ein Schritt, bei dem die ersten Verstärkungsfasern mit einem elastischen Dichtmittel unlösbar bedeckt werden, um einen wiederverwendbaren, schlauchartigen Formkörper auszubilden, so dass die Ausgangsform in einem unter Druck setzbaren Druckraum des Formkörpers befindlich ist,
c) ein Schritt, bei dem eine Druckmittelleitung an einer verbleibenden Öffnung des Formkörpers abgedichtet eingesetzt ist,
d) ein Schritt, bei dem der Formkörper durch ein Zuführen von einem Druckmittel über die Druckmittelleitung in den Druckraum bis zu einem ersten vorbestimmten Druckwert aufgepumpt wird,
e) ein Schritt, bei dem der aufgepumpte Formkörper mit zumindest einer Lage zweiter Verstärkungsfasern umgeben wird,
f) ein Schritt, bei der der mit den zweiten Verstärkungsfasern bedeckte Formkörper in eine mehrteilige Form eingelegt wird, die die Außenkontur des Faserverbundbauteils festlegt,
g) ein Schritt, bei dem ein Harz in die die zweiten Verstärkungsfasern umschließende Form eingebracht wird und der Druck im Druckraum des Formkörpers zum Zeitpunkt des Harz-Zuführens höher ist, als der erste Druckwert,
h) ein Schritt, bei der die Temperatur so lange erhöht wird, bis das Harz ausgehärtet ist, und
i) ein Schritt, bei der der Druck aus dem. Formkörper abgelassen wird, die Form geöffnet wird, das Faserverbundbauteil aus der Form genommen wird und der Formkörper aus dem die zweiten Verstärkungsfasern beinhaltenden Faserverbundbauteil herausgenommen wird.

Unter Zuhilfenahme des benutzten Formkörpers, wird das nächste Faserverbundbauteil hergestellt. Nach Schritt i) folgt also wiederSchritt d).

Die Schritte müssen nicht zwangsweise in der angegeben Abfolge ablaufen; insbesondere gilt dies bzgl. Schritt i).

Der Formkörper oder faserverstärkte Aufblaskern wird vorteilhafterweise aufgeblasen, bis er eine zumindest abschnittsweise konvexe Form aufweist, er wird dann mit Fasern belegt oder beflochten, wobei danach der Druck abgelassen wird, konvexe Bereiche eingedrückt werden, wobei danach der Kern mit einem Preform in eine RTM-Form eingelegt wird, diese Form verschlossen wird, der Aufblaskern wieder mit Druck beaufschlagt wird, Harz infiltriert wird und das Harz danach aushärtet.

So ist es von Vorteil, wenn zumindest einige oder alle der Schritte a) bis i) in dieser Reihenfolge, zeitlich nacheinander durchgeführt werden.

Auch ist es von Vorteil, wenn als elastisches Dichtmittel ein Elastomer verwendet wird. Durch die gummiartigen Eigenschaften des Elastomers, kann einerseits der Druckverlust beim Aufpumpen des Formkörpers vermieden werden, andererseits aber ein Ausdehnen, soweit dies die ersten Verstärkungsfasern zulassen, ermöglicht werden.

Als besonders vorteilhaft hat es sich herausgestellt, wenn als erstes Dichtmittel Silikon verwendet wird. Silikon ist besonders kostengünstig zu erstehen und gut zu verarbeiten.

Besonders formstabile, langlebige und präzise Formkörper lassen sich erreichen, wenn die ersten und/oder zweiten Verstärkungsfasern so angeordnet werden, dass sie jeweils eine Faserlage nach Art eines Gewebes oder eines Geflechts bilden.

Wenn die ersten und/oder zweiten Verstärkungsfasern jeweils eine Faserlage bilden, wobei die jeweilige Faserlage aus drei einzelnen Verstärkungsfaserlagen aufgebaut wird, so können besonders steife Formkörper bedarfsspezifisch mit unterschiedlichen Geometrien und Belastungsverhalten erzielt werden.

Es ist ferner von Vorteil, wenn das Harz mit einem zweiten Druck zugeführt wird, der niedriger als der Druck im Druckraum des Formkörpers zum Zeitpunkt des Harz-Zuführens ist.

In einer Variante hat es sich als vorteilhaft herausgestellt, wenn der Druck im Druckraum des Formkörpers zum Zeitpunkt des Harz-Zuführens höher ist, als der erste Druckwert. Besonders dünnwandige Faserverbundbauteile lassen sich damit erzielen.

Um einen besonders großen Anwendungsbereich für die Faserverbundbauteile erschließen zu können, ist es von Vorteil, wenn die Ausgangsform, der Formkörper und das Faserverbundbauteil eine komplexe Geometrie mit sich änderndem Querschnitt in deren/dessen Längserstreckung und/oder einen oder mehrere Hinterschnitte aufweist.

Ein besonders gutes Verhältnis zu Steifigkeit und Gewicht stellt sich ein, wenn die ersten und/oder zweiten Verstärkungsfasern aus der Gruppe der Kohlefasern, Aramidfasern und Glasfasern entnommen sind. Außerdem sind alle anderen synthetischen Fasern und Naturfasern verwendbar.

Von Vorteil ist es ferner, wenn das Harz ein duroplastisches oder thermoplastisches Harz ist. Auf diese Weise kann auf die speziellen Beanspruchungen des Faserverbundbauteils effizient eingegangen werden.

Wenn der erste Druckwert zwischen 0,5 bar und 1,25 bar liegt, vorzugsweise ungefähr 0,8 bar ist und/oder der Druck im Druckraum bei der Harzzuführung ca. 6 bar bis 100 bar, vorzugsweise 35 bar, beträgt, so lässt sich ein einfaches Bewegen des Formkörpers mit nachfolgender Erzielung eines dünnwandigen Faserverbundbauteils einfach erreichen.

Es ist auch von Vorteil, wenn unmittelbar vor oder während des Schrittes i) der Druckraum an eine Vakuumquelle angeschlossen wird. Dann lässt sich der Formkörper aus dem Roh-Faserverbundbauteil einfacher entnehmen.

Die besagte Anmeldung betrifft auch einen Formkörper mit einer nahezu allseitig geschlossenen, aufpumpbaren Elastomerhülle, die zumindest an einer Stelle eine, eine Zu- und/oder Abfuhr eines Druckmittels ermöglichende Öffnung aufweist, wobei die Elastomerhülle unlösbar mit einer Lage aus ersten Verstärkungsfasern verbunden ist.

Es ist die Aufgabe, die Nacheile aus dem Stand der Technik zu vermeiden und einen wiederverwertbaren Kern zur Verfügung zu stellen, der einerseits ohne Aufbereitung wiederverwendbar ist, aber andererseits eine hohe Präzision bei gleichzeitig niedrigen Kosten bietet und ferner die Fertigung von vielseitig einsetzbaren Faserverbundteilen ermöglicht.

Dies wird dadurch gelöst, dass der Formkörper eine komplexe Profilgeometrie aufweist und ein spezielles, nachfolgen erläutertes Verfahren eingesetzt wird.

Wenn der Formkörper hohl ausgestaltet ist und zumindest einen Hinterschnitt auf seiner Außenseite aufweist, lassen sich besonders einfach solch komplexen Geometrien realisieren.

Vorteilhafterweise ist die Elastomerhülle so ausgebildet, dass sie Silikon umfasst und einen Formkörper ausbildet.

Es wird hier also ein faserverstärkter Aufblaskern zur Verfügung gestellt, der den spezifischen Anforderungen des automatisierbaren Prozesses zur Herstellung von Faserverbundhohlbauteilen angepasst ist. Dabei wird der Nachteil vermieden, dass das Formteil nicht formstabil ist, wenn es einfach aufgeblasen wird, wodurch sich die Maßhaltigkeit sonst verschlechtern würde. Es wird nachfolgend ein Konzept vorgestellt, das die Maßhaltigkeit der Kontur des letztendlichen Faserverbundbauteils verbessert, wobei eine für den Prozess ausreichende Festigkeit und Steifigkeit des Aufblaskerns vorgehalten wird. Nach Entnahme und kurzer Überprüfung des Aufblaskerns nach Fertigstellung des Faserverbundbauteils ist dieser sofort wieder einsatzfähig, anders als bei bekannten Blaskernen aus Thermoplasten, wie PE, PA, oder Sand sowie anderen ausscheidbaren Kernen. Das Belegen des Formkörpers im biegeschlaffen, nicht maßhaltigen Zustand wird verhindert. Stattdessen wird eine formgetreue, maßhaltige und effiziente Vorgehensweise ermöglicht.

Dieses Kernkonzept wird am Lehrstuhl für Carbon Composites der TU München derzeit erforscht und die Funktion nachgewiesen. Die nachfolgend hier vorgestellte Erfindung, die einen auch als "BRAIDFORM" bezeichneten Vorformling erzeugt, baut auf dieser Kerntechnologie auf. Der auch als faserverstärkte Aufblaskern bezeichnete Kern, oder abgekürzt FAK, wird nachfolgend noch einmal kurz beschrieben.

Bei den faserverstärkten Aufblaskernen handelt es sich um ein Kernkonzept das eine hohe Komplexität bei geringen Prozesskosten bietet. Es handelt sich hierbei um einen der Endkontur nahen, strukturstabilen Schlauchkern der mit Innendruck beaufschlagt wird. Auf diesem Kern kann dann eine Faserablage von Hand oder mittels automatisierter Prozesse wie z.B. dem Umflechten erfolgen. Während des anschließenden Einbringens des Harzes fungiert der Aufblaskern als Druckmembrane, der eine gute Verpressung der Gewebelagen garantiert und eine konstante Wandstärke des Endbauteiles sicherstellt. Trotz all dieser Vorteile handelt es sich aber um einen direkt wiederverwendbaren Kern, der sofort nach dem Entformen für das Abformen des nächsten Bauteiles bereit steht.

Der Faserverstärkte Aufblaskern ist ein Silikonschlauch der gezielt mit Verstärkungsfasern versehen ist und bereits die Innenkontur des späteren Bauteils besitzt. Dieser Kern kann, wie die späteren Bauteile, ebenfalls mittels Flechten hergestellt werden. Als Matrixwerkstoff wird anstelle des sonst üblichen Harzes ein Silikon in das Gewebe eingebracht. Das Silikon bietet gute mechanische Belastbarkeit bei hoher Flexibilität und lässt sich somit problemlos aus komplexen Geometrien mit Hinterschnitten entformen.

Das Verfahren "Faserverstärkter Aufblaskern" ist durch folgende Schritte gekennzeichnet:
1. Ein der Endkontur naher verlorener Kern aus Schaum, Sand, wasserlöslichen oder anderen Materialien für verlorene Kerne wird mit einer oder mehreren Lagen von Verstärkungsfasern wie Kevlar, Glas-, Kohle, Naturfasern oder ähnlichem überzogen.
2. Die Faserablage kann von Hand, oder automatisiert mit Gewebematerialien, einzelnen Faser-Rovings oder bevorzugt in einem Flechtprozess geschehen
3. Dieser, von Fasern umgebene Rohling, wird danach mit einer Elastomermatrix benetzt.
4. Die Benetzung des Faserbelegten Rohlings kann durch tauchen, ansaugen, eindrücken, besprühen, handeinstreichen oder anderen Verfahren geschehen. Es kann vor allem eine Außenform mit definierter Kontur und definiertem Spalt zwischen verlorenem Kern und Außenform gelegt werden, wobei anschließend flüssiges Elastomer in den vorliegenden Spalt eingesaugt oder eingepresst wird.
5. Auf dem so entstandenen dichten, endkonturnahen und formstabilen Silikondruckschlauch erfolgt die Ablage der Faserverbundlagen des späteren Endbauteils mittels Handablage, automatisierter Faserablage oder vorzugsweise eines Flechtprozesses.
6. Dazu wird der Silikondruckschlauch über eine externe Druckversorgung mit einem Innendruck beaufschlagt damit die notwendige Formstabilität für die Faserablage besteht.
7. Die so entstandene Preform wird anschließend in einem weiteren zwei oder mehrteiligen Außenwerkzeug mit Harz, vorzugsweise einem Duromerharz, aber auch Thermoplastharz, infiltriert oder injiziert.
8. Dabei wird über den am Druckschlauch angelegten Überdruck eine Kompression der Fasern und eine definierte Bauteildicke sichergestellt.
9. Nach dem Aushärten unter Umgebungstemperatur, in einem Temperaturofen oder Mikrowellenofen und anschließendem Entformen aus dem Werkzeug kann der Faserverstärkte Aufblaskern zerstörungsfrei entfernt und wiederverwendet werde, d.h. Rückführung zu Punkt 6.
10. Das Endprodukt ist ein Hohlkammerfaserverbundbauteil mit möglichen Hinterschnitten der mittels eines wiederverwendbaren Kernes hergestellt wurde.

Mit dieser Technologie ist es möglich wirtschaftlich Serienfaserverbundhohlbauteile herzustellen. Es hat sich aber auch gezeigt, dass es noch einige Verbesserungsmöglichkeiten gibt. Nachteile dieses Verfahrens sind folgende:
- Der Kern kann mit zusätzlicher Trennschicht (Folie) geschützt werden (Harz greift Silikon an und die gewünschten Standzeiten der Kerne werden nicht erreicht)
- Beim Belegen mit Fasern (z. Bsp. mit Umflechten) werden sehr kurze Zykluszeiten erreicht, kleiner 5 min. Bis das Bauteil dann noch infiltriert und ausgehärtet ist, der Kern entnommen wurde und nach einer Kontrolle wieder zum Flechtprozess zurückgeführt werden kann, können mehrere Stunden vergehen. Es ist also eine große Anzahl dieser teuren Kerne nötig.

- Eine örtliche Trennung der Prozesse Umflechten und Infiltrieren ist aus diesem Grund auch nur mit sehr großer Kernanzahl möglich. Außerdem müssen die Kerne immer mit transportiert werden.
- In der Serienfertigung ist es oft nötig zwischen den einzelnen Prozessen Zwischenlager vorzusehen. Will man das mit einem bekannten Prozess vorsehen, ist wieder eine viel höhere Anzahl von Kernen notwendig.

Die Fertigung mit dem Faserverstärkten Aufblaskern zeigt gegenüber den bisherigen Konzepten also schon erhebliche Vorteile. Kann aber noch in einigen Punkten verbessert werden. Hier greift die Idee des "BRAIDFORM-Verfahrens" an. Der Begriff "BRAIDFORM" bezeichnet das Verfahren, sowie die stabile, gebinderte Flechtpreform, die dabei entsteht.

Ein neues, erfindungsgemäßes Verfahren weist dabei die Merkmale des Anspruchs 1 auf.

Auf diese Weise kann einerseits ein schnelles Fertigen des Vorformlings, also der "BRAIDFORM" geschaffen werden und von einer Fertigstellung durch Injizieren mit Harz und Aushärten getrennt werden.

Ein Lagerungsschritt der Vorformlinge kann zwischen dem Verfahren zum Herstellen des Vorformlings und einem nachfolgenden Verfahren zum Herstellen des Faserverbundfertigbauteils zwischengeschaltet sein. Der Vorformling kann gelagert werden, um Puffer in der Produktion aufzubauen. Er kann auch zu anderen Produktionsstätten transportiert werden. Die Kerne brauchen auch nicht mehr hin und her transportiert werden.

Während das Verfahren zum Herstellen eines Vorformlings sehr schnell ablaufen kann, läuft das Verfahren zum Herstellen des Faserverbundbauteils relativ langsam, verglichen mit der Vorformlingherstellung ab, wodurch die beiden Prozesse voneinander entkoppelt werden können. Die Effizienz lässt sich dadurch erhöhen und die Kosten vermindern. Auch lässt sich die Flexibilität bei der Herstellung erhöhen. Selbst eine Einbeziehung unterschiedlicher Fertigungsstätten an unterschiedlichen Standorten lässt sich realisieren.

Vorteilhafte Ausführungsformen des Verfahrens zum Herstellen eines Vorformlings werden nachfolgend näher erläutert und sind Teil der Unteransprüche.

So ist es von Vorteil, wenn das Bindemittel in Form von Garn, Vlies und/oder Pulver zwischen Fasern des Gewebematerials und/oder durch diese Fasern gebildete Lagen eingebracht wird.

Besonders effizient lässt sich das Verfahren ablaufen, wenn das Bindemittel ein Teil einer Faser des Gewebematerials ist.

Ferner ist es von Vorteil, wenn das Trennbauteil beim Entnehmen des Vorformlings vom Kern am Vorformling oder am Kern verbleibt.

Durch dem Einsatz des Aufblaskerns lassen sich die Kosten besonders niedrig halten und der Vorformling besonders schnell fertigen. Prozesssicher ist es, wenn der Aufblaskern Verstärkungsfasern aufweist, die in Silikon eingebettet sind.

Eine Variante ist dadurch gekennzeichnet, dass im Schritt b) die Fasern manuell oder automatisiert aufgebracht werden, vorteilhafterweise über Flechten.

Zweckmäßig ist es ferner, wenn zwischen dem Schritt b) und dem Schritt c) der mit Gewebematerial und Bindemittel versehene Kern in eine Fixierform eingelegt wird.

Damit eine Formstabilität gewährleistet ist, ist es von Vorteil, wenn der als Aufblaskern ausgebildete Kern mit zusätzlichem Innen- und/oder Außendruck beaufschlagt wird, wobei vorteilhafterweise der Innendruck größer als der Außendruck ist.

Um eine Beschädigung des eventuell silikonaufweisenden Kerns zu vermeiden und die gesetzlichen Erfordernisse zu erfüllen, ist es von Vorteil, wenn das Trennbauteil als Trennfolie ausgebildet ist, die vorteilhafterweise als Foliensack oder Folienschlauch ausgebildet ist.

Die Erfindung betrifft auch ein Verfahren zum Herstellen eines Faserverbundfertigbauteils, mit den folgenden nacheinander ablaufenden Schritten:
a) Herstellen eines Vorformlings wie vorstehend als erfindungsgemäß erläutert, umfassend ein Trennbauteil, wie eine als Foliensack oder Folienschlauch ausgebildete Trennfolie,
b) Einlegen des Vorformlings mit dem Trennbauteil in eine Injektionsform,
c) Beaufschlagen des Trennbauteils mit Innendruck und/oder Außendruck, wobei vorteilhafterweise der Innendruck größer als der Außendruck ist,
d) injizieren einer Matrix, wie Harz mit einem Beaufschlagungsdruck, der dem Außendruck entspricht,
e) Halten des Inhalts der Injektionsform auf einer bestimmten Temperatur und/oder einem bestimmten Druck für einen bestimmten Zeitraum,
f) Entnehmen eines ausgehärteten Faserverbundrohbauteils, beinhaltend den in einer ausgehärteten Matrix befindlichen Vorformling.

Dabei sind Varianten dadurch gekennzeichnet, dass Faserverbundrohbauteile mittels einer Nachbearbeitung, wie einer spanenden Bearbeitung, insbesondere einer fräsenden, drehenden oder bohrenden Bearbeitung, und/oder einem Lackieren, in ein Faserverbundfertigbauteil weiterverarbeitet wird.

Zweckmäßig ist es dabei, wenn das Trennbauteil beim Entnehmen des ausgehärteten Faserverbundrohbauteils aus diesem entnommen wird und in einem Bearbeitungsschritt für ein nachfolgendes Bauteil wiederverwendet wird.

Wenn das Trennbauteil nach Fertigstellung des fixierten und zwischengehärteten Vorformlings auf diesen aufgebracht wird, so wird die Prozesssicherheit erhöht.

Explizit seien hier nochmals Variationen des Verfahrens erläutert:
So ist es möglich, dass vor dem Umflechten des faserverstärkten Aufblaskerns dieser mit einer als Folienschlauch ausgebildeten Trennfolie überzogen wird. Dieser schützt den Kern beim Flechten und Bindern, also Aushärten des Bindemittels. Die Trennfolie verbleibt entweder in dem Vorformling oder wird dann zusammen mit dem faserverstärkten Aufblaskern ausgezogen.

Alternativ ist es möglich, dass zwischen einer Blase und dem Vorformling zusätzlich ein Folienschlauch eingeführt wird, der die Blase schützt und es ermöglicht, dass diese evtl. öfters wiederverwendet wird.

Die wichtigsten Vorteile dieses Verfahrens sind:
1. Der faserverstärkte Aufblaskern kommt nicht mehr in Kontakt mit dem Harzsystem ist deshalb viel länger haltbar.
2. Der faserverstärkte Aufblaskern kann schon nach dem Umflechten und Bindern wieder in den Prozesskreislauf zurückgeführt werden. Diese beiden Prozesse laufen sehr schnell und direkt nacheinander ab. Deshalb sind auch für Großserienfertigungen nicht mehr so viele faserverstärkte Aufblaskerne notwendig, wie mit dem bisherigen Prozess, bei dem der faserverstärkte Aufblaskern mit infiltriert wurde.
3. Der Vorformling enthält nur noch die Fasermaterialien und evtl. noch einen dünnen Folienschlauch, der jedoch nur einmal verwendet wird. Deshalb gibt es keine Begrenzung mehr, wenn man ein Zwischenlager zur Optimierung der Prozesse benötigt oder somit die Prozesse Umflechten und Infiltrieren an verschiedenen Orten durchführen muss oder möchte. Dadurch erhält man mehr Möglichkeiten, Prozesse anzupassen und zu optimieren.

Insgesamt können zusätzlich zu den einzelnen Vorteilen dieses erfindungsgemäßen Verfahrens Kosten bei der Herstellung von Faserverbundhohlbauteilen, im Speziellen von Umflechtbauteilen, gesenkt werden.

Es ist insbesondere möglich als thermoplastischen Binder einen Kleber einzusetzen, wie einen Sprühkleber, Papierkleber, usw. Dieser Kleber verklebt die Faserrovings dann miteinander. Dadurch kann man sich den zusätzlichen Aufheizschritt sparen, was einen großen Vorteil darstellt und sich in den Kosten positiv bemerkbar machen kann.

Die Erfindung wird nachfolgend auch mit Hilfe von Zeichnungen näher erläutert. Es zeigen:
- Fig. 1: ein Ablaufdiagramm für ein erfindungsgemäßes Verfahren zum Herstellen eines Vorformlings und eines erfindungsgemäßen Verfahrens zum Herstellen eines Faserverbundfertigbauteils,
- Fig. 2 bis 6: die Abfolge zum Herstellen eines Faserverbundhohlbauteils mit Hilfe eines eingeschweißten Kerns in einer schematischen Darstellung.

Die Figuren sind lediglich schematischer Natur und dienen nur dem Verständnis der Erfindung. Die gleichen Elemente werden mit denselben Bezugszeichen versehen.

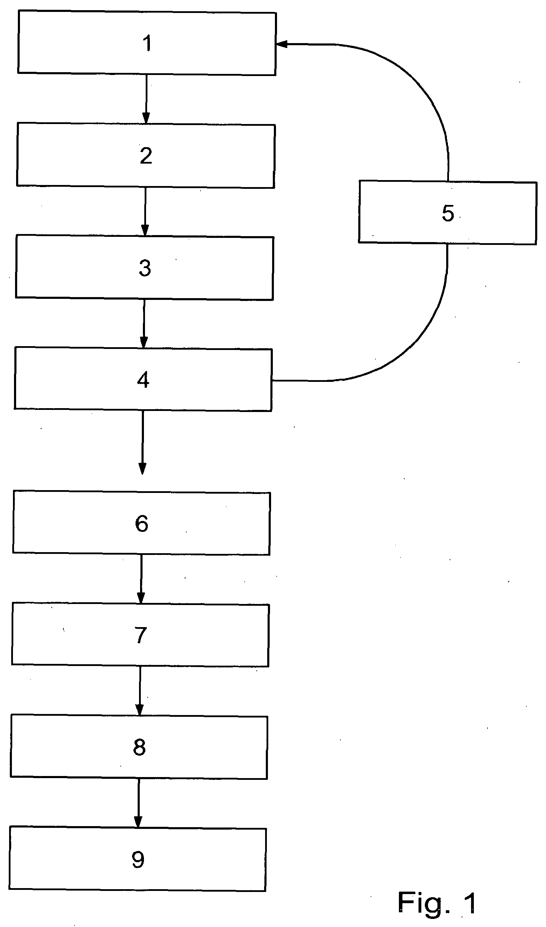

In Fig. 1 ist eine schematische Darstellung der einzelnen Schritte eines erfindungsgemäßen Verfahrens zum Herstellen eines Vorformlings dargestellt. In einem Schritt 1 wird ein faserverstärkter Aufblaskern erzeugt. Der Innendruck wird so gewählt, dass der Aufblaskern konturstabil ist. Wie bereits eingangs erläutert, können auch andere Arten von Kernen Verwendung finden.

In einem nachfolgenden zweiten Schritt, wird der faserverstärkte Ausblaskern automatisiert mit Fasern belegt. Es wird zusätzlich Bindemittelmaterial, das auch als Bindermaterial bezeichnet werden kann, in Form von Garnen, Vliesen oder Pulvern aufgebracht. Dieses Bindermaterial läuft zwischen den Fasern oder Lagen aus Fasern, mit denen der faserverstärkte Aufblaskern belegt ist, eingebracht.

In einem nachfolgenden zweiten Schritt, wird der umflochtene Kern in eine geschlossene Form eingelegt. Der Kern wird bedruckt, die Fasern / das Geflecht mit Binder aufgeheizt, nämlich bis zum Schmelzpunkt des Binders oder sogar darüber hinaus. In diesem Schritt 3 ist auch ein Wiederabkühlen der Fasern bzw. des Geflechts inkludiert.

In einem nachfolgenden Schritt 4 wird die fixierte und zwischengehärtete Vorformlingausgestaltung, also eine gebinderte Preform mit dem faserverstärkten Aufblaskern aus der öffnenbaren und bis dahin geschlossenen Form entnommen. Der faserverstärkte Aufblaskern wird aus der jetzt eigenstabilen Preform, d.h. dem Vorformling, entnommen, also aus ihm ausgezogen.

In einem nachfolgenden Schritt 5 wird der faserverstärkte Aufblaskern wieder sofort zum Umflechten und Bindern zur Weiternutzung für einen Schritt 1 zurückgeführt.

In einem Schritt 6 wird der fixierte und zwischengehärtete Vorformling, der auch als "BRAIDFORM" bezeichnet werden kann, gelagert, um einen Puffer für die Produktion aufzubauen. Dieser Vorformling kann auch zu anderen Produktionsstätten transportiert werden.

In einem Schritt 7 wird ein Foliensack mit einem Druckanschluss in den Vorformling eingezogen, z.B. ein Folienschlauch mit eingeklebtem Schlauch. Der Vorformling mit Sack wird dann in eine geschlossene Injektionsform eingelegt, z.B. eine RTM-Form, wobei vorzugsweise ein mindestens zweiteiliges Metallwerkzeug genutzt wird.

Die Blase wird dann mit Innendruck beaufschlagt, das Harz / die Matrix mit Druck injiziert, wobei der Druck im Folienschlauch über dem Injektionsdruck liegen sollte.

In einem Schritt 8 wird ein dem Infiltrationsschritt 7 nachfolgender Entformungsschritt durchgeführt, der ein dem Aushärten nachfolgendes Faserverbundhohlbauteilentnehmen aus der RTM-Form beinhaltet. Die Blase wird dabei aus dem Bauteil entnommen oder kann alternativ im Bauteil verbleiben, da sie sehr leicht ist. Die Blase kann evtl. auch mehrere Male wiederverwendet werden.

Am Ende des Schritts 8 liegt ein Faserverbundrohbauteil vor.

Ein nachfolgender Schritt 9 führt zu dem Faserverbundfertigbauteil. Das im Schritt 8 enthaltene Bauteil kann dabei nachbearbeitet werden, insbesondere durch fräsen, bohren oder lackieren. Eine Rückführung des Kerns oder des Kernmaterials ist dabei nicht notwendig.

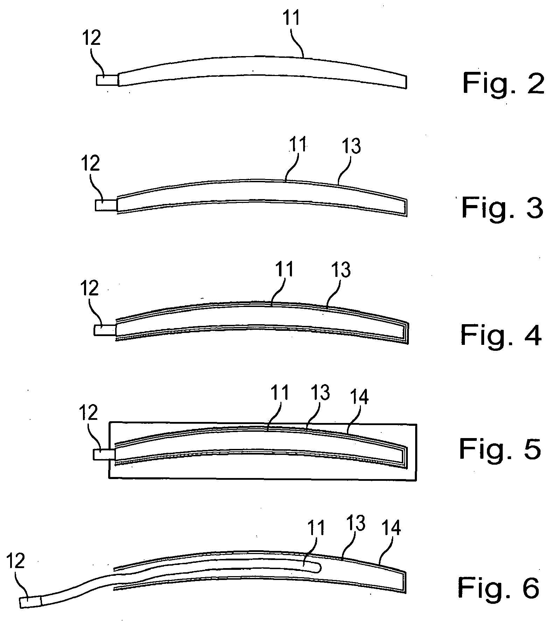

In den Fig. 2 bis 6 ist eine Abfolge des Fertigens gemäß des erfindungsgemäßen Verfahrens dargestellt. Ein als Kernschlauch ausgebildeter Kern 11 hat dabei einen für eine Aufblasvorrichtung vorgesehene Befüllstruktur 12 an einem Ende. Der Kern 11 kann aber auch aus Metall, auslösbaren Materialien, aufschmelzbaren Materialien oder anderen Materialien bestehen.

Wie in Fig. 3 dargestellt ist, wird der Kern in ein als Folie ausgebildetes Trennbauteil 13 eingeschweißt. In einem nachfolgenden Schritt wird ein Gewebematerial 14 von Hand oder automatisiert aufgebracht. Dieses Gewebematerial 14 kann einzelne Faser-Rovings aufweisen oder bei einer bevorzugten automatisierten Belegung, z.B. mittels einer Flechttechnik, dem Fiber Placement, Fiber Patch Preforming oder einer Stick Preform belegt werden.

In Fig. 5 ist das Infiltrieren mit einem Polymer, z.B. einem Duromer, wie Harz und langsamer Wärmezufuhr dargestellt. Der eingeschweißte, von Fasern umgebene Rohling, also der fixierte und zwischengehärtete Vorformling wird mit einer Polymermatrix, bevorzugt einer Duromermatrix, benetzt. Die Benetzung des faserbelegten Rohlings kann durch tauchen, ansaugen, eindrücken, besprühen, handeinstreichen oder andere Verfahren geschehen. Der eingeschweißte, mit Fasern belegte Kern 11, in einer Außenform mit definierter Kontur und definiertem Spalt, wird zwischen Kern und Außenform gelegt und anschließend wird eine flüssige Duromermatrix in den vorliegenden Spalt eingesaugt und eingepresst.

Nach einem Aushärten wird, wie in Fig. 6 dargestellt, der Kern 11 aus dem Faserverbundrohbauteil optional entnommen. Das vorherige Aushärten erfolgt bei Umgebungstemperatur, in einem Temperaturofen oder einem Mikrowellenofen. Es sei darauf hingewiesen, dass alternativ die Preform mit Hilfe eines Binders fixiert werden kann. Mit Hilfe eines Binders wird dabei die Preform fixiert. Der Kern kann dann der Preform entnommen werden, wobei die Folie an der Preform verbleibt. Die so entstandene Preform kann nun transportiert, ggf. gelagert werden. Bei der Infusion wird die Preform in eine Außenform gelegt. Der Innenraum der Preform wird mit Luft oder einer Flüssigkeit bedruckt. Das Duromerharz wird mit Überdruck oder wahlweise mit Unterdruck, in die Form gepresst. Nach dem Aushärten unter Umgebungstemperatur, in einem Temperaturofen oder einem Mikrowellenofen und anschließendem Entformen aus dem Werkzeug kann der Kern aus dem Bauteil entnommen werden.

Die Vorteile des BRAIDFORM-Prozesses gegenüber bisher bekannten Prozessen ist umfassend dargelegt. Hervorzuheben ist einmal eine mögliche Senkung der Kernkosten je Faserverbundbauteil auf 1/3 von vergleichbaren Prozessen. Außerdem können durch die Herstellung einer "kernlosen" BRAIDFORM die einzelnen Prozessschritte besser optimiert werden und äußeren Randbedingungen angepasst werden. Zum Beispiel kann das Umflechten an einem anderen Ort stattfinden wie die Infiltration. Grund dafür könnten vorhandenes Equipment aber auch Maschinen- und Personalauslastung sein. Außerdem ist es besser sogenannte Pufferspeicher aufzubauen. Dies gibt Sicherheit bei Prozessausfall. Auch ist eine bessere Abstimmung der Einzelprozesse auf die Zykluszeiten möglich. Zum Beispiel können beim Umflechten in einer Schicht so viele "BRAIDFORMEN" hergestellt werden, wie dann in 2 Schichten infiltriert und ausgehärtet werden können.

Wie beschrieben, ist die Anwendungsbreite sehr vielfältig und die Kosten für Technologieentwicklungen können dann auf mehrere Bauteile und Prozessstraßen übertragen werden. Dadurch würde sich der Nutzwert noch weiter erhöhen.

Es ist von Vorteil, wenn als Binder Bindermaterialien aus Epoxymaterial verwendet werden. So können Bindersysteme realisiert werden, die schon bei Raumtemperatur klebrig sind. Um diese zu aktivieren, benötigt man eine nur geringe Temperatur und einen nur geringen Druck.

## Patentansprüche

1. Verfahren zum Herstellen eines Vorformlings für eine Weiterverarbeitung zu einem harzbeinhaltenden Faserverbundfertigbauteil, **gekennzeichnet durch** den folgenden nacheinander ablaufenden Schritten:
a) Herstellen eines wieder verwendbaren Aufblaskerns (11),
b) direktes Belegen des Aufblaskerns (11) oder eines auf den Aufblaskern (11) hinzugefügten Trennbauteils (13) mit Fasern und Bindemittelmaterialien,
c) Beaufschlagen des Aufbaus aus zumindest Aufblaskern (11), Fasern (14) und Bindemittel mit Wärme zum fixierenden Zwischenhärten der Fasern (14) **durch** Aufschmelzen, Abkühlen und Verfestigen des Bindemittels,
d) Entnehmen eines fixierten und zwischengehärteten Vorformlings aus Fasern (14), wobei der Aufblaskern (11) aus dem zwischengehärteten Vorformling entnommen wird.

2. Verfahren nach Anspruch 1, **dadurch gekennzeichnet, dass** das Bindemittel in Form von Garn, Vlies und/oder Pulver zwischen den Fasern und/oder zwischen durch diese Fasern gebildete Lagen eingebracht wird.

3. Verfahren nach Anspruch 1 oder 2, **dadurch gekennzeichnet, dass** das Bindemittel ein Teil einer Faser ist.

4. Verfahren nach einem der Ansprüche 1 bis 3, **dadurch gekennzeichnet, dass** das Trennbauteil (13) beim Entnehmen des Vorformlings vom Aufblaskern (11) am Vorformling oder am Aufblaskern (11) verbleibt.

5. Verfahren nach einem der Ansprüche 1 bis 4, **dadurch gekennzeichnet, dass** der Aufblaskern (11) Verstärkungsfasern aufweist, die in Silikon eingebettet sind.

6. Verfahren nach einem der Ansprüche 1 bis 5, **dadurch gekennzeichnet, dass** im Schritt b) die Fasern manuell oder automatisiert aufgebracht werden, vorteilhafterweise über Flechten.

7. Verfahren nach einem der Ansprüche 1 bis 6, **dadurch gekennzeichnet, dass** zwischen dem Schritt b) und dem Schritt c) der mit Fasern und Bindemittel versehene Aufblaskern (11) in eine Fixierform eingelegt wird.

8. Verfahren nach Anspruch 7, **dadurch gekennzeichnet, dass** der Aufblaskern (11) mit zusätzlichem Innen- und/oder Außendruck beaufschlagt wird, wobei vorteilhafterweise der Innendruck größer als der Außendruck ist.

9. Verfahren nach einem der Ansprüche 1 bis 8, **dadurch gekennzeichnet, dass** das Trennbauteil (13) als Trennfolie ausgebildet ist, die vorteilhafterweise als Foliensack oder Folienschlauch ausgebildet ist.

10. Verfahren zum Herstellen eines Faserverbundfertigbauteils mit den folgenden nacheinander ablaufenden Schritten:
a) Herstellen eines Vorformlings nach einem der vorhergehenden Ansprüche, umfassend ein Trennbauteil (13) wie eine als Foliensack oder Folienschlauch ausgebildete Trennfolie,
b) Einlegen des Vorformlings mit dem Trennbauteil (13) in eine Injektionsform,
c) Beaufschlagen des Trennbauteils (13) mit Innendruck und/oder Außendruck, wobei vorteilhafterweise der Innendruck größer als der Außendruck ist,
d) Injizieren einer Matrix, wie Harz, mit einem Beaufschlagungsdruck, der dem Außendruck entspricht,
e) Halten des Inhalts der Injektionsform auf einer bestimmten Temperatur und/oder einem bestimmten Druck für einen bestimmten Zeitraum,
f) Entnehmen eines ausgehärteten Faserverbundrohbauteils, beinhaltend den in einer ausgehärteten Matrix befindlichen Vorformling.

11. Verfahren nach Anspruch 10, **dadurch gekennzeichnet, dass** das Faserverbundrohbauteil mittels einer Nachbearbeitung, wie einer spanenden Bearbeitung, insbesondere einer fräsenden, drehenden oder bohrenden Bearbeitung, und/oder einem Lackieren, in ein Faserverbundfertigbauteil weiterverarbeitet wird.

12. Verfahren nach Anspruch 10 oder 11, **dadurch gekennzeichnet, dass** das Trennbauteil (13) beim Entnehmen des ausgehärteten Faserverbundrohbauteils aus diesem entnommen wird und in einem Bearbeitungsschritt für ein nachfolgendes Bauteil weiter verwendet wird.

13. Verfahren nach einem der Ansprüche 10 bis 12, **dadurch gekennzeichnet, dass** das Trennbauteil (13) nach Fertigstellung des fixierten und zwischengehärteten Vorformlings auf diesen aufgebracht wird.

## Claims

1. Method for producing a preform for further processing into a finished fibre composite part comprising resin, **characterised by** the following steps which take place one after another:
a) production of a reusable inflation core (11),
b) direct application of fibres and binding agent materials to the inflation core (11) or a separating part (13) added to the inflation core (11),
c) exposure of the construction consisting of at least the inflation core (11), fibres (14) and binding agent to heat for fixing and intermediate hardening of the fibres (14) by melting on, cooling and solidifying of the binding agent,
d) removal of a fixed and intermediately hardened preform of fibres (14), wherein the inflation core (11) is removed from the intermediately hardened preform.

2. Method according to claim 1, **characterised in that** the binding agent is introduced in the form of yarn, non-woven fabric and/or powder between the fibres and/or between layers formed by these fibres.

3. Method according to claim 1 or 2, **characterised in that** the binding agent is a part of a fibre.

4. Method according to one of claims 1 to 3, **characterised in that** the separating part (13) remains on the preform or on the inflation core (11) when the preform is removed from the inflation core (11).

5. Method according to one of claims 1 to 4, **characterised in that** the inflation core (11) exhibits reinforcing fibres which are embedded in silicone.

6. Method according to one of claims 1 to 5, **characterised in that** in step b) the fibres are applied manually or automatically, advantageously by means of braiding.

7. Method according to one of claims 1 to 6, **characterised in that** the inflation core (11) provided with fibres and binding agent is placed in a fixing mould between the step b) and the step c).

8. Method according to claim 7, **characterised in that** the inflation core (11) is exposed to additional internal and/or external pressure, wherein advantageously the internal pressure is greater than the external pressure.

9. Method according to one of claims 1 to 8, **characterised in that** the separating part (13) is embodied as a separating foil which is advantageously embodied as a foil bag or foil tube.

10. Method for producing a finished fibre composite part with the following steps which take place one after another:
a) production of a preform according to one of the preceding claims, comprising a separating part (13) such as a separating foil embodied as a foil bag or foil tube,
b) placing of the preform with the separating part (13) in an injection mould,
c) exposure of the separating part (13) to internal pressure and/or external pressure, wherein advantageously the internal pressure is greater than the external pressure,
d) injection of a matrix, such as resin, with an application pressure which corresponds to the external pressure,
e) holding of the contents of the injection mould at a specific temperature and/or a specific pressure for a specific length of time,
f) removal of a hardened unfinished fibre composite part, comprising the preform located in a hardened matrix.

11. Method according to claim 10, **characterised in that** the unfinished fibre composite part is processed further into a finished fibre composite part by means of further working, such as material removing machining, in particular milling, turning or boring, and/or painting.

12. Method according to claim 10 or 11, **characterised in that** when the hardened unfinished fibre composite part is removed the separating part (13) is removed from the latter and used further in a machining step for a following part.

13. Method according to one of claims 10 to 12, **characterised in that** after completion of the fixed and intermediately hardened preform the separating part (13) is applied to it.

## Revendications

1. Procédé de fabrication d'une préforme en vue de sa transformation en un composant fini composite en fibres contenant de la résine, **caractérisé par** les étapes successives suivantes :
a) Fabrication d'un noyau de soufflage (11) réutilisable,
b) Dépose directe de fibres et de liants sur le noyau de soufflage (11) ou un composant de démoulage (13) ajouté sur le noyau de soufflage (11),
c) Exposition à la chaleur de la structure constituée d'au moins le noyau de soufflage (11), de fibres (14) et de liant en vue du durcissement intermédiaire destiné à fixer les fibres (14) par fusion, refroidissement et solidification du liant,
d) Retrait d'une préforme en fibres, fixée et ayant subi un durcissement intermédiaire, le noyau de soufflage (11) étant retiré de la préforme ayant subi un durcissement intermédiaire.

2. Procédé selon la revendication 1, **caractérisé en ce que** le liant introduit entre les fibres et/ou entre les couches formées par ces fibres se présente sous forme de fil, de non-tissé et/ou de poudre.

3. Procédé selon la revendication 1 ou la revendication 2, **caractérisé en ce que** le liant est une partie d'une fibre.

4. Procédé selon l'une quelconque des revendications 1 à 3, **caractérisé en ce que** le composant de démoulage (13) reste sur la préforme ou sur le noyau de soufflage (11) lorsqu'on retire la préforme du noyau de soufflage (11).

5. Procédé selon l'une quelconque des revendications 1 à 4, **caractérisé en ce que** le noyau de soufflage (11) présente des fibres de renfort noyées dans du silicone.

6. Procédé selon l'une quelconque des revendications 1 à 5, **caractérisé en ce que**, à l'étape b), les fibres sont appliquées manuellement ou de façon automatique, de préférence en les tressant.

7. Procédé selon l'une quelconque des revendications 1 à 6, **caractérisé en ce qu'**on introduit le noyau de soufflage (11), doté de fibres et de liant, dans un moule de fixation entre l'étape b) et l'étape c).

8. Procédé selon la revendication 7, **caractérisé en ce que** le noyau de soufflage (11) est soumis à une pression interne et/ou externe supplémentaire, la pression interne étant, de manière avantageuse, supérieure à la pression externe.

9. Procédé selon l'une quelconque des revendications 1 à 8, **caractérisé en ce que** le composant de démoulage (13) est un film de démoulage conçu, de manière avantageuse, sous forme de sac en film ou de tube en film.

10. Procédé de fabrication d'un composant fini composite en fibres comportant les étapes successives suivantes :
a) Fabrication d'une préforme selon l'une quelconque des revendications précédentes, comprenant un composant de démoulage (13) tel un film de séparation en forme de sac en film ou de tube en film,
b) Dépose de la préforme dans un moule d'injection avec le composant de démoulage (13),
c) Application d'une pression interne et/ou d'une pression externe sur le composant de démoulage (13), la pression interne étant avantageusement supérieure à la pression externe,
d) Injection d'une matrice, telle que de la résine, à une pression d'admission correspondant à la pression externe,
e) Maintien du contenu du moule d'injection à une certaine température et/ou à une certaine pression pendant un certain temps,
f) Retrait d'un composant brut composite à base de fibres durci, contenant la préforme se trouvant dans la matrice durcie.

11. Procédé selon la revendication 10, **caractérisé en ce que** le composant brut composite à base de fibres est transformé en un composant composite fini à base de fibres au moyen d'une opération de reprise, telle qu'un usinage, en particulier un fraisage, un tournage ou un perçage, et/ou une application de peinture.

12. Procédé selon la revendication 10 ou la revendication 11, **caractérisé en ce que** le composant de démoulage (13) est retiré du composant brut composite à base de fibres durci lors du retrait de celui-ci et réutilisé dans une étape de traitement d'un composant suivant.

13. Procédé selon l'une quelconque des revendications 10 à 12, **caractérisé en ce que** le composant de démoulage (13) est appliqué sur la préforme fixée et ayant subi un durcissement intermédiaire après l'achèvement de celle-ci.
